# EUROPÄISCHE PATENTSCHRIFT

(11) **EP 2 420 628 B1**
(45) Veröffentlichungstag und Bekanntmachung des Hinweises auf die Patenterteilung: **09.10.2013**
(21) Anmeldenummer: 11177385.9
(22) Anmeldetag: 12.08.2011
(51) Int. Cl.: E03C 1/02, F16L 33/24

(54) **Schlauchanschlussnippel**
Hose connection nipple
Mamelon de raccordement de tuyau flexible

(30) Priorität: 19.08.2010 DE 102010039541
(43) Veröffentlichungstag der Anmeldung: 22.02.2012
(73) Patentinhaber: Hansgrohe SE, 77761 Schiltach (DE)
(72) Erfinder: Kalmbach, Marc, 78733 Aichhalden (DE); Echtle, Klaus, 77787 Nordrach (DE)
(74) Vertreter: Patentanwälte Ruff, Wilhelm, Beier, Dauster & Partner

(56) Entgegenhaltungen:
- DE-U1- 9 212 740
- DE-U1- 29 506 835
- FR-A1- 2 542 844

## Beschreibung

Die Erfindung betrifft einen Schlauchanschlussnippel für einen Schlauch, insbesondere einen Brauseschlauch.

Brauseschläuche müssen an dem Auslass einer Sanitärarmatur oder an einer Leitung befestigt werden. Diese Befestigung soll lösbar sein, damit man den Schlauch austauschen kann, falls aus Reparaturgründen oder aus ästhetischen Gründen ein anderer Schlauch angeschlossen werden soll. Dieser Anschluss muss natürlich auch dicht sein. Üblicherweise haben Brauseschläuche an ihren Enden einen Schlauchanschlussnippel mit einer Anschlussmutter, die nach Art einer Überwurfmutter aufgebaut ist und an der Sanitärarmatur eingeschraubt werden kann.

Es ist bereits ein Nippel zum drehbaren Anschluss eines Schlauchs bekannt (DE 3309936), bei dem in dem Schlauchende eine Schlauchendhülse eingesetzt ist, die mit einem Flansch an einer Anlageschulter der Anschlussmutter anliegt. Das aus dem Schlauch herausragende Ende der Schlauchendhülse ist von einem Lagerring umgeben. Zur Abdichtung des Lagerrings gegenüber dem Ende der Schlauchendhülse dient eine Lippendichtung. Zur Abdichtung des Schlauchanschlusses gegenüber der Sanitärarmatur dient ein Dichtring, der auf dem Lagerring aufliegt. Aufgrund der Vielzahl der verwendeten Einzelteile gestaltet sich die Montage nicht ganz einfach, und auch das Auswechseln einer Dichtung ist aufwändig.

Weiterhin bekannt ist ein Nippel zum Anschluss eines Schlauchs, bei dem der Nippel einen radialen Flansch aufweist, auf den eine Lippendichtung aufliegt. In axialer Richtung liegt auf dem einem Schenkel der Lippendichtung ein scheibenartiger ausgebildeter Lagerring auf (DE 29700776 U1).

**Weiterhin bekannt ist ein Nippel zum drehbaren Anschluss eines Schlauches, bei dem zum Abdichten gegenüber einer Handbrause eine Flachdichtung und zur Abdichtung gegenüber dem drehbaren Nippel eine doppelte Lippendichtung vorgesehen ist (**DE 9212740 U1**).**

Der Erfindung liegt die Aufgabe zu Grunde, einen Schlauchanschlussnippel zu schaffen, der bei einfachem Aufbau leichter zu montieren ist und bei dem sich gegebenenfalls ein Austausch der Dichtungen leichter realisieren lässt.

Zur Lösung dieser Aufgabe schlägt die Erfindung einen Schlauchanschlussnippel mit den im Anspruch 1 genannten Merkmalen vor. Weiterbildungen der Erfindung sind Gegenstand von Unteransprüchen.

Während bei dem bekannten Schlauchanschlussnippel der Lagerring zwischen der Lippendichtung zur Abdichtung gegenüber der Schlauchendhülse und dem Dichtring zur Abdichtung gegenüber der Armatur angeordnet ist, so dass bei dem Montieren des Schlauchs in der Fabrik eine bestimmte Reihenfolge eingehalten werden muss, gibt es erfindungsgemäß nur noch ein Dichtelement, das zum Schluss eingesetzt wird, so dass eine falsche Reihenfolge bei der Montage nicht auftreten kann. Darüber hinaus gestaltet sich das Auswechseln deutlich einfacher, da es nur eine Dichtung zum Auswechseln gibt, die beim Entfernen des Anschlusselements als erstes Element sichtbar ist.

In nochmaliger Weiterbildung der Erfindung kann vorgesehen sein, dass das einzige Dichtelement mit dem Auflagering fest verbunden ist, entweder durch eine nachträgliche Verbindung oder durch die Herstellung als Zweikomponentenbauteil. Es lässt sich beispielsweise als Zweikomponentenspritzteil herstellen.

Erfindungsgemäß kann vorgesehen sein, dass das Dichtelement in seinem mit dem Schlauchendnippel zusammenwirkenden Bereich als Lippendichtung ausgebildet ist. Durch die einstückige Ausbildung des Dichtelements kann dafür gesorgt werden, dass die Lippendichtung nicht in falscher Orientierung eingesetzt werden kann.

In dem Bereich des Dichtelements, in dem es mit dem Anschluss der Sanitärarmatur zusammenwirkt, kann das Dichtelement als Flachdichtung ausgebildet sein.

In nochmaliger Weiterbildung der Erfindung kann vorgesehen sein, dass das Anschlusselement eine Anlageschulter nicht nur für den Flansch des Schlauchendnippels aufweist, sondern mit einem axialen Abstand von dieser Anlageschulter eine zweite Anlageschulter für den Auflagering. Ohne diese Anlageschulter wird beim Befestigen des Anschlusselements an der Sanitärarmatur der Auflagering gegen den Flansch des Schlauchendnippels und damit gegen die Anlageschulter für diesen Flansch angedrückt. Damit ist dann bei festgelegtem Schlauch ein Verdrehen des Schlauchs nicht mehr möglich. Sieht man aber eine zweite Anlageschulter für den Auflagering vor, so kann man diese Anlageschulter so gestalten, dass dann, wenn der Auflagering auf seiner Anlageschulter aufliegt, der Flansch des Schlauchendnippels in axialer Richtung noch ein gewisses Spiel hat. Er kann dann auch bei festgelegtem Anschlusselement noch verdreht werden.

Dieses Verdrehen ist insbesondere dann von Interesse, wenn das Anschlusselement über ein Gewinde mit der Sanitärarmatur verbunden wird, das Anschlusselement also eine Anschlussmutter ist. Dies ist eine der üblichen Befestigungsarten für Brauseschläuche. Hier muss beim Festschrauben das Anschlusselement verdreht werden. Solange noch keine Kraft in axialer Richtung auf den Flansch ausgeübt wird, ist das Verdrehen der Anschlussmutter gegenüber dem Schlauch auch ohne die zweite Anlageschulter möglich. Gegen Ende der Befestigung dreht sich dann aber der Schlauch mit, falls diese zweite Anlageschulter nicht vorhanden ist.

Die Erfindung ist aber auch in den Fällen anwendbar, wo das Anschlusselement nicht als Anschlussmutter ausgebildet ist, sondern auf andere Weise mit der Sanitärarmatur verbunden wird, beispielsweise als Bajonettverschluss.

Die durch die zweite Anlageschulter mit dem entsprechenden Abstand gebildete Möglichkeit, den Schlauch gegenüber dem Anschlusselement verdrehen zu können, spielt aber auch im festgeschraubten Zustand eine Rolle, da bei ständigem Gebrauch auch der Schlauch selbst verdreht werden kann.

In Weiterbildung der Erfindung kann vorgesehen sein, dass der als Flachdichtung ausgebildete Bereich des Dichtelements axial auf dem Auflagering aufliegt. Dadurch wird er unterstützt und kann seinerseits mit dem Stirnende des Armaturenteils zusammenwirken, ohne dass eine weitere Unterlegscheibe oder dergleichen dazwischen gelegt werden müsste.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigt:

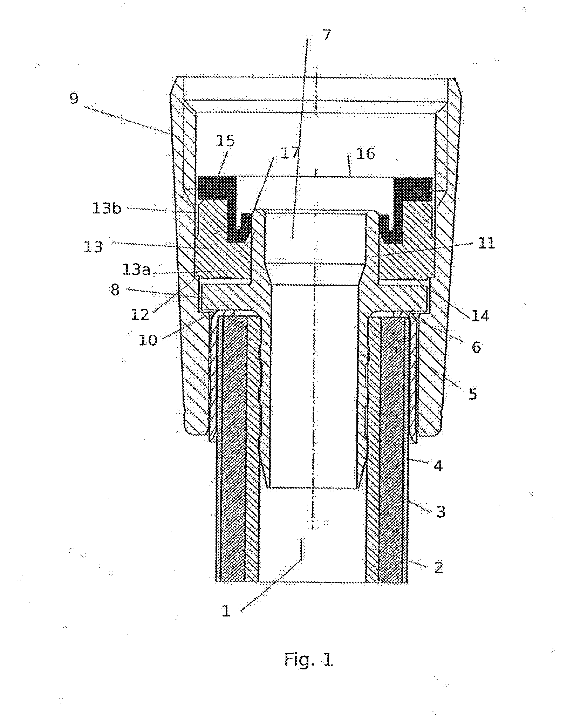

- Figur 1: einen axialen Schnitt durch das Ende eines Brausemschlauchs.

In Figur 1 ist das Ende eines Schlauchs 1 dargestellt. Der Schlauch enthält einen Innenschlauch 2, einen diesen umgebenden weiteren Schlauch 3 und eine äußere Hülle 4. In dem Endbereich ist auf den Schlauch 1 eine Metallhülse 5 aufgeschoben, die einen nach innen gerichteten Rand 6 aufweist, mit dem sie auf der Stirnkante des Schlauchs 1 aufliegt.

In das Ende des Schlauchs ist ein Schlauchendnippel 7 eingeschoben und mit dem Innenschlauch verbunden. Zur Verbesserung der Verbindung zwischen dem Schlauchendnippel 7 und dem Schlauch 1 ist der Nippel 7 in seinem mit dem Schlauch 1 zusammenwirkenden Endbereich mit einer profilierten Oberfläche versehen. Der Schlauchendnippel 7 ist soweit in den Schlauch 1 eingeschoben, dass sein an ihm ausgebildeter radial nach außen gerichteter Flansch 8 auf der Metallhülse 5 aufliegt. Der Flansch 8 ragt in radialer Richtung über die Außenseite der Metallhülse 5 hinaus.

Der Schlauch mit dem Schlauchendnippel 7 ist von oben her in das als Anschlussmutter ausgebildete Anschlusselement 9 eingesteckt. Dieses Anschlusselement 9 weist eine innere Anlageschulter 10 auf. In dem sich an die Anlageschulter 10 anschließenden Bereich weist das Anschlusselement 9 eine Öffnung mit einem Innendurchmesser auf, der etwas größer ist als der Außendurchmesser der Metallhülse 5. In dem Bereich der Anlageschulter 10 selbst ist der Innendurchmesser des Anschlusselements größer und entspricht in etwa dem Außendurchmesser des Flanschs 8 des Schlauchendnippels 7. Dadurch kann der Flansch 8 auf der Anlageschulter 10 aufliegen, so dass das Anschlusselement 9 durch Angreifen an dem Flansch 8 eine axiale Kraft auf den Schlauch 1 ausüben kann.

Oberhalb des Flanschs 8 ist der Schlauchendnippel 7 fortgesetzt und bildet dort einen Endbereich 11.

In einem axialen Abstand von der Anlageschulter 10 enthält das Anschlusselement 9 an seiner Innenseite eine zweite Anlageschulter 12. Der in axialer Richtung gemessene Abstand zwischen den beiden Anlageschultern 10 und 12 ist größer als die Dicke des Flanschs 8.

Auf den oberhalb des Flanschs 8 vorhandenen Endbereich 11 des Schlauchendnippels 7 ist von der offenen Seite des Anschlusselements 9 her ein Auflagering 13 aufgeschoben, der den Endbereich 11 umgibt. Der Außendurchmesser des Auflagerings 13 entspricht in etwa dem Innendurchmesser des Anschlusselements 9 oberhalb der von unten gesehen zweiten Anlageschulter 12. Der Auflagering 13 liegt auf der von unten gesehen zweiten Anlageschulter 12 auf. Der Abstand zwischen der dem Flansch 8 zugewandten Unterseite 14 des Auflagerings 13 und der von unten gesehen ersten Anlageschulter 10 ist größer als die Dicke des Flanschs 8.

Der Auflagering 13 weist einen ersten Bereich 13a, in dem er an dem Endbereich 11 des Schlauchendnippels 7 anliegt, und einen zweiten Bereich 13b auf, in dem er einen radialen Abstand von dem Endbereich 11 aufweist.

Auf der von dem Schlauch 1 abgewandten Seite des Auflagerings 13 ist ein Dichtring 15 angebracht, der als Flachdichtung ausgebildet ist. Seine von dem Schlauch 1 abgewandten freie Oberseite 16 liegt in einer Ebene. An der Innenseite ist an dem Dichtring 15 eine Lippendichtung 17 ausgebildet, die sich zwischen der radialen Innenseite des zweiten Bereichs 13 b des Auflagerings 13 und der Außenseite des Endbereichs 11 des Schlauchendnippels 7 abstützt. Die Lippendichtung 17 und der Dichtring 15 sind ein einstückiges Bauteil, das im dargestellten Ausführungsbeispiel mit dem Auflagering 13 verbunden ist, beispielsweise verklebt.

Wenn das Anschlusselement in Form einer Anschlussmutter an der Sanitärarmatur angeschraubt wird, so liegt das Anschlussende der Sanitärarmatur auf der Stirnfläche 16 des Dichtrings 15 an, so dass dort eine Abdichtung nach außen erfolgt. Die Abdichtung gegenüber dem Schlauch 1 erfolgt durch die Lippendichtung 17. Selbst bei mit großer Kraft festgeschraubter Anschlussmutter bleibt aber wegen des Abstands des Flanschs 8 in axialer Richtung der Schlauch 1 noch drehbar.

Erfindungsgemäß kann vorgesehen sein: Ein Schlauchanschlussnippel enthält einen in ein Schlauchende eingesteckten Schlauchendnippel mit einem Flansch, der in radialer Richtung über die Außenseite des Schlauchs vorspringt. Dieser Flansch liegt in einer Anschlussmutter auf einer inneren Anlageschulter auf, so dass dadurch die Anschlussmutter eine axiale Kraft auf den Schlauch ausüben kann. Auf der gegenüberliegenden Seite des Flanschs ist ein Auflagering angeordnet. Zur Abdichtung des Schlauchanschlussnippels ist ein einstückiges Dichtelement vorgesehen, das für die Sanitärarmatur als Flachdichtung und für den Schlauchendnippel als Lippendichtung ausgebildet ist. Das Dichtelement liegt auf der der Sanitärarmatur zugewandten Seite des Auflagerings und kann mit diesem verbunden sein.

## Patentansprüche

1. Schlauchanschlussnippel, mit
1.1 einem Schlauchendnippel (7), der
1.2 mit einem Schlauchende verbunden werden kann und
1.3 einen radial, in eingebautem Zustand über die Schlauchaußenseite vorspringenden, Flansch (8) aufweist,
1.4 einem das gegenüber dem Schlauchende liegende Ende des Schlauchendnippels (7) umgebenden Auflagering (13),
1.5 einem Anschlusselement (9) zur Verbindung des Schlauchendes mit dem Anschlussende einer Sanitärarmatur, einer Leitung oder dergleichen, wobei
1.6 das Anschlusselement (9) eine Anlageschulter (10) für den Flansch (8) des Schlauchendnippels (7) aufweist, **gekennzeichnet durch**
1.7 ein Dichtelement (15, 17), das
1.8 einstückig als auf dem Auflagering (13) aufliegender Dichtring (15) zur Abdichtung gegenüber einem Anschlussende einer Sanitärarmatur und als Dichtung zwischen dem Auflagering (13) und dem Schlauchendnippel (7) zur Abdichtung gegenüber dem Schlauchendnippel (7) ausgebildet ist.

2. Schlauchanschlussnippel nach Anspruch 1, bei dem das Dichtelement mit dem Auflagering (13) fest verbunden ist, insbesondere als Zweikomponentenspritzteil ausgebildet ist.

3. Schlauchanschlussnippel nach Anspruch 1 oder 2, bei dem das Dichtelement in seinem mit dem Schlauchendnippel (7) zusammenwirkenden Bereich als Lippendichtung (17) ausgebildet ist.

4. Schlauchanschlussnippel nach einem der vorhergehenden Ansprüche, bei dem das Dichtelement in seinem mit dem Anschlussende der Sanitärarmatur zusammenwirkenden Bereich als Flachdichtung (15) ausgebildet ist.

5. Schlauchanschlussnippel nach einem der vorhergehenden Ansprüche, bei dem das Anschlusselement (9) eine Anlageschulter (12) für den Auflagering (13) aufweist, die von der Anlageschulter (10) für den Flansch (8) des Schlauchendnippels (7) einen derartigen Abstand aufweist, dass der axiale Abstand zwischen der dem Flansch (8) zugewandten Seite (14) des Auflagerings (13) und der Anlageschulter (10) für den Flansch (8) des Schlauchendnippels (7) größer ist als die Dicke des Flanschs (8) des Schlauchendnippels (7).

6. Schlauchanschlussnippel nach einem der vorhergehenden Ansprüche, bei dem das Anschlusselement (9) als Anschlussmutter ausgebildet ist.

7. Schlauchanschlussnippel nach einem der Ansprüche 1-5, bei dem das Anschlusselement (9) als Bajonettverschluss ausgebildet ist.

8. Schlauchanschlussnippel nach einem der vorhergehenden Ansprüche, bei dem das Dichtelement eine Anlagefläche für das Ende des Anschlusses der Sanitärarmatur bildet.

9. Schlauchanschlussnippel nach einem der Ansprüche 4-8, bei dem der als Flachdichtung (15) ausgebildete Bereich des Dichtelements axial auf dem Auflagering (13) aufliegt.

## Claims

1. Hose connection nipple, with
1.1 a hose end nipple (7) which
1.2 can be connected to an end of a hose and
1.3 has a flange (8) radially projecting beyond the hose exterior in the installed state,
1.4 a contact ring (13) surrounding that end of the hose end nipple (7) opposite the hose end,
1.5 a connection element (9) for connecting the hose end to the connection end of a sanitary fitting, a pipe or the like, where
1.6 the connection element (9) has a contact shoulder (10) for the flange (8) of the hose end nipple (7), **characterized by**
1.7 a sealing element (15, 17) which
1.8 is designed in one piece as a sealing ring (15) contacting the contact ring (13) for sealing from a connection end of a sanitary fitting and as a seal between the contact ring (13) and the hose end nipple (7) for sealing from the hose end nipple (7).

2. Hose connection nipple according to Claim 1, wherein the sealing element is firmly connected to the contact ring (13), and in particular is designed as a two-component injection moulding.

3. Hose connection nipple according to Claim 1 or 2, wherein the sealing element is designed as a lip seal (17) in its area interacting with the hose end nipple (7).

4. Hose connection nipple according to any of the preceding claims, wherein the sealing element is designed as a flat seal (15) in its area interacting with the connection end of the sanitary fitting.

5. Hose connection nipple according to any of the preceding claims, where the connection element (9) has a contact shoulder (12) for the contact ring (13) which is at a distance from the contact shoulder (10) for the flange (8) of the hose end nipple (7) such that the axial distance between the side (14) of the contact ring (13) facing the flange (8) and the contact shoulder (10) for the flange (8) of the hose end nipple (7) is greater than the thickness of the flange (8) of the hose end nipple (7).

6. Hose connection nipple according to any of the preceding claims, where the connection element (9) is designed as a connection nut.

7. Hose connection nipple according to one of Claims 1 to 5, where the connection element (9) is designed with a bayonet lock.

8. Hose connection nipple according to any of the preceding claims, where the sealing element forms a contact surface for the end of the sanitary fitting connection.

9. Hose connection nipple according to any of Claims 4 to 8, where the area of the sealing element designed as a flat seal (15) is in axial contact with the contact ring (13).

## Revendications

1. Mamelon de raccordement de tuyau flexible, comprenant
1.1 un mamelon d'extrémité de tuyau (7), qui
1.2 peut être raccordé à une extrémité de tuyau, et
1.3 présente une bride (8) faisant radialement saillie sur la face extérieure du tuyau à l'état monté,
1.4 un anneau d'appui (13) entourant l'extrémité du mamelon d'extrémité de tuyau (7) située face à l'extrémité de tuyau,
1.5 un élément de raccordement (9) destiné à raccorder l'extrémité de tuyau à l'extrémité du raccord d'une robinetterie sanitaire, d'une conduite ou d'un élément similaire, sachant que
1.6 l'élément de raccordement (9) présente un épaulement d'appui (10) pour la bride (8) du mamelon d'extrémité de tuyau (7), caractérisé
1.7 par un élément d'étanchéité (15, 17), qui
1.8 est conçu en une pièce en tant que bague d'étanchéité (15) s'appuyant sur l'anneau d'appui (13) afin d'assurer l'étanchéité par rapport à une extrémité du raccord d'une robinetterie sanitaire, et en tant que joint entre l'anneau d'appui (13) et le mamelon d'extrémité de tuyau (7) afin d'assurer l'étanchéité par rapport au mamelon d'extrémité de tuyau (7).

2. Mamelon de raccordement de tuyau flexible selon la revendication 1, dans lequel l'élément d'étanchéité est fermement relié à l'anneau d'appui (13), en particulier en tant que pièce moulée par injection à deux composants.

3. Mamelon de raccordement de tuyau flexible selon la revendication 1 ou 2, dans lequel l'élément d'étanchéité est conçu en tant que joint à lèvre (17) dans sa zone d'interaction avec le mamelon d'extrémité de tuyau (7).

4. Mamelon de raccordement de tuyau flexible selon l'une des revendications précédentes, dans lequel l'élément d'étanchéité est conçu en tant que joint plan (15) dans sa zone d'interaction avec l'extrémité du raccord de robinetterie sanitaire.

5. Mamelon de raccordement de tuyau flexible selon l'une des revendications précédentes, dans lequel l'élément de raccordement (9) présente un épaulement d'appui (12) pour l'anneau d'appui (13), qui est distant de l'épaulement d'appui (10) pour la bride (8) du mamelon d'extrémité de tuyau (7) de manière telle que la distance axiale entre la face (14) de l'anneau d'appui (13) orientée vers la bride (8) et l'épaulement d'appui (10) pour la bride (8) du mamelon d'extrémité de tuyau (7) est supérieure à l'épaisseur de la bride (8) du mamelon d'extrémité de tuyau (7).

6. Mamelon de raccordement de tuyau flexible selon l'une des revendications précédentes, dans lequel l'élément de raccordement (9) est conçu en tant qu'écrou de raccordement.

7. Mamelon de raccordement de tuyau flexible selon l'une des revendications 1 à 5, dans lequel l'élément de raccordement (9) est conçu en tant que joint à baïonnette.

8. Mamelon de raccordement de tuyau flexible selon l'une des revendications précédentes, dans lequel l'élément d'étanchéité constitue une surface d'appui pour l'extrémité du raccord de la robinetterie sanitaire.

9. Mamelon de raccordement de tuyau flexible selon l'une des revendications 4 à 8, dans lequel la partie de l'élément d'étanchéité conçue en tant que joint plan (15) repose axialement sur l'anneau d'appui (13).
